# EUROPEAN PATENT APPLICATION

(11) **EP 3 068 168 A1**
(43) Date of publication of application: **14.09.2016**
(21) Application number: 13898580.9
(22) Date of filing: 05.12.2013
(51) Int. Cl.: H04W 36/04, H04W 36/06

(54) **REDIRECTION METHOD, DEVICE AND SYSTEM**

(71) Applicant: Huawei Technologies Co., Ltd., Longgang District Shenzhen, Guangdong 518129 (CN)
(72) Inventor: WANG, Xueliang, Shenzhen Guangdong 518129 (CN)
(74) Representative: Körber, Martin Hans
(86) International application number: PCT/CN2013/088680
(87) International publication number: WO 2015/081540

(57) **Abstract**

Embodiments of the present invention disclose a redirection method and a device and relate to the communications field, which implement redirection of a user equipment in a PCH state or an FACH state, avoid a redirection failure and improve system capacity and service quality. A method provided in the embodiments of the present invention includes: receiving, a cell update request message that is sent, in a first cell, by a user equipment in a PCH state or an FACH state, where the PCH state includes a cell_paging channel CELL_PCH and a registration area_paging channel URA_PCH, and the FACH state includes a cell_forward access channel CELL_FACH; determining, according to a preset policy, to redirect the user equipment to a second cell or a second frequency channel number; and sending a cell update response message to the user equipment, where the cell update response message includes frequency channel number information and scrambling code information that are of the second cell or frequency channel number information of the second frequency channel number.

## Description

### TECHNICAL FIELD

The present invention relates to the communications field, and in particular, to a redirection method, a device, and a system.

### BACKGROUND

Service layering may increase service absorption capacity of a cell and obtain better adaptive multi-rate (Adative Multi-Rate, AMR for short) voice experience. Generally, the service layering can be implemented by means of redirection. For example, in the prior art, the service layering generally may be implemented by using a cell_forward access channel (Cell_Forward Access Channel, CELL_FACH for short) to a cell_dedicatd channel (Cell_Dedicated Channel, CELL_DCH for short) (F2H) directed retry decision (direct retry decision DRD for short) redirection.

However, in the prior art, this redirection method depends on a completely same coverage of a source cell and a target cell, which easily causes a redirection failure in a macro-micro networking scenario or a multiband scenario.

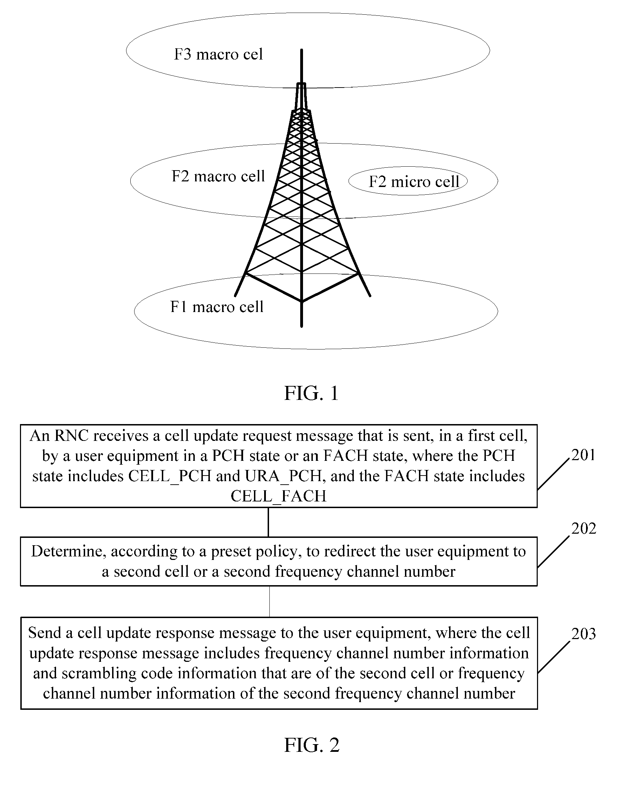

For example, referring to FIG. 1, which is a schematic diagram of macro-micro networking, an F1 macro cell is configured on a frequency channel number F1, and an F2 macro cell and an F2 micro cell are configured on a frequency channel number F2. Generally, a user in an idle (Idle) state and a user equipment in a paging channel state (Paging Channel, PCH for short) camp on the F1 macro cell. When a location in which the user equipment is located overlaps with the F2 micro cell, if the user equipment is redirected to the F2 during F2H DRD, and the target cell is the F2 macro cell, in this case, a failure occurs.

For an Idle user, when a radio network controller (Radio Network Controller, RNC for short) receives a radio resource control (Radio Resource Control, RRC for short) setup request from a user equipment (User Equipment, UE for short) on the F1 and identifies a packet switched service (Packet Switched Service, PS for short), the radio network controller may perform RRC redirection. However, for a user in the PCH state or in a forward access channel (Forward Access Channel, FACH for short) state, a suitable redirection method is not available in the prior art to implement the service layering.

### SUMMARY

Embodiments of the present invention provide a redirection method, a device, and a system, which can implement redirection of a user equipment in a PCH state or an FACH state, avoid a redirection failure, and improve system capacity and service quality.

To achieve the foregoing objective, the following technical solutions are used in the embodiments of the present invention:
According to a first aspect, a redirection method is provided, including:
   receiving a cell update request message that is sent, in a first cell, by a user equipment in a paging channel PCH state or a forward access channel FACH state, where the PCH state includes a cell_paging channel CELL_PCH and a registration area_paging channel URA_PCH, and the FACH state includes a cell_forward access channel CELL_FACH;
   determining, according to a preset policy, to redirect the user equipment to a second cell or a second frequency channel number; and
   sending a cell update response message to the user equipment, where the cell update response message includes frequency channel number information and scrambling code information that are of the second cell or frequency channel number information of the second frequency channel number.

In a first possible implementation manner of the first aspect, with reference to the first aspect, the determining, according to a preset policy, to redirect the user equipment to a second cell or a second frequency channel number includes:
determining, based on the number of users that are in the FACH state and located in the first cell, to redirect the user equipment to the second cell or the second frequency channel number.

In a second possible implementation manner of the first aspect, with reference to the first possible implementation manner of the first aspect, the determining, based on the number of users that are in the FACH state and located in the first cell, to redirect the user equipment to the second cell includes:
if it is determined that the number of users that are in the FACH state and located in the first cell is greater than or equal to a first redirection out threshold, and
the number of users that are in the FACH state and located in the second cell is less than or equal to a first redirection in threshold, or if it is determined that a difference between the number of users that are in the FACH state and located in the second cell and the number of users that are in the FACH state and located in the first cell is greater than a first relative redirection threshold, determining to redirect the user equipment to the second cell, where the second cell is a blind handover neighboring cell of the first cell or a same coverage inter-frequency neighboring cell of the first cell.

In a third possible implementation manner of the first aspect, with reference to the first possible implementation manner of the first aspect, the determining, based on the number of users that are in the FACH state and located in the first cell, to redirect the user equipment to the second frequency channel number includes:
if it is determined that the number of users that are in the FACH state and located in the first cell is greater than or equal to a first redirection out threshold, determining to redirect the user equipment to the second frequency channel number.

In a fourth possible implementation manner of the first aspect, with reference to the first aspect, the determining, according to a preset policy, to redirect the user equipment to a second cell or a second frequency channel number includes:
redirecting the user equipment to the second cell or the second frequency channel number based on a service type of a service requested by the user equipment.

In a fifth possible implementation manner of the first aspect, with reference to the fourth possible implementation manner of the first aspect, the redirecting the user equipment to the second cell or the second frequency channel number based on a service type of a service requested by the user equipment includes:
determining, according to the cell update request message, the service type of the service requested by the user equipment, where the service type includes a real-time service or a non-real-time service; and
when the first cell is a preferential camping cell, if it is determined that the service type of the service is a non-real-time service, determining to redirect the user equipment to the second cell or the second frequency channel number, where the second cell is a blind handover neighboring cell of the first cell or a same coverage inter-frequency neighboring cell of the first cell.

In a sixth possible implementation manner of the first aspect, with reference to the fourth possible implementation manner of the first aspect, the redirecting the user equipment to the second cell or the second frequency channel number based on a service type of a service requested by the user equipment includes:
determining, according to the cell update request message, the service type of the service requested by the user equipment, where the service type includes a real-time service or a non-real-time service; and
when the first cell is a non-preferential camping cell, if it is determined that the service type of the service is a real-time service, determining to redirect the user equipment to the second cell or the second frequency channel number, where the second cell is a blind handover neighboring cell of the first cell or a same coverage inter-frequency neighboring cell of the first cell.

In a seventh possible implementation manner of the first aspect, with reference to the first aspect, the determining, according to a preset policy, to redirect the user equipment to a second cell or a second frequency channel number includes:
determining, based on downlink power load of the first cell, to redirect the user equipment to the second cell or the second frequency channel number.

In an eighth possible implementation manner of the first aspect, with reference to the seventh possible implementation manner of the first aspect, the determining, based on downlink power load of the first cell, to redirect the user equipment to the second cell includes:
if it is determined that the downlink power load of the first cell is greater than or equal to a second redirection out threshold, and
downlink power load of the second cell is less than or equal to a second redirection in threshold, or if it is determined that a difference between the downlink power load of the second cell and the downlink power load of the first cell is greater than a second relative redirection threshold, determining to redirect the user equipment to the second cell, where the second cell is a blind handover neighboring cell of the first cell or a same coverage inter-frequency neighboring cell of the first cell.

In a ninth possible implementation manner of the first aspect, with reference to the seventh possible implementation manner of the first aspect, the determining, based on downlink power load of the first cell, to redirect the user equipment to the second frequency channel number includes:
if it is determined that the downlink power load of the first cell is greater than or equal to a second redirection out threshold, determining to redirect the user equipment to the second frequency channel number.

According to a second aspect, an embodiment of the present invention provides an RNC, including:
a receiving unit, configured to receive a cell update request message that is sent, in a first cell, by a user equipment in a paging channel PCH state or a forward access channel FACH state, where the PCH state includes a cell_paging channel CELL_PCH and a registration area_paging channel URA_PCH, and the FACH state includes a cell_forward access channel CELL_FACH;
a redirecting unit, configured to determine, according to a preset policy, to redirect the user equipment to a second cell or a second frequency channel number; and
a sending unit, configured to send a cell update response message to the user equipment, where the cell update response message includes frequency channel number information and scrambling code information that are of the second cell or frequency channel number information of the second frequency channel number.

In a first possible implementation manner of the second aspect, with reference to the second aspect, the redirecting unit is specifically configured to:
determine, based on the number of users that are in the FACH state and located in the first cell, to redirect the user equipment to the second cell or the second frequency channel number.

In a second possible implementation manner of the second aspect, with reference to the first possible implementation manner of the second aspect, the redirecting unit is specifically configured to:
if it is determined that the number of users that are in the FACH state and located in the first cell is greater than or equal to a first redirection out threshold, and
the number of users that are in the FACH state and located in the second cell is less than or equal to a first redirection in threshold, or if it is determined that a difference between the number of users that are in the FACH state and located in the second cell and the number of users that are in the FACH state and located in the first cell is greater than a first relative redirection threshold, determine to redirect the user equipment to the second cell, where the second cell is a blind handover neighboring cell of the first cell or a same coverage inter-frequency neighboring cell of the first cell.

In a third possible implementation manner of the second aspect, with reference to the first possible implementation manner of the second aspect, the redirecting unit is specifically configured to:
if it is determined that the number of users that are in the FACH state and located in the first cell is greater than or equal to a first redirection out threshold, determine to redirect the user equipment to the second frequency channel number.

In a fourth implementation manner of the second aspect, with reference to the second aspect, the redirecting unit is specifically configured to:
redirect the user equipment to the second cell or the second frequency channel number based on a service type of a service requested by the user equipment.

In a fifth possible implementation manner of the second aspect, with reference to the fourth possible implementation manner of the second aspect, the redirecting unit is specifically configured to:
determine, according to the cell update request message, the service type of the service requested by the user equipment, where the service type includes a real-time service or a non-real-time service; and
when the first cell is a preferential camping cell, if it is determined that the service type of the service is a non-real-time service, determine to redirect the user equipment to the second cell or the second frequency channel number, where the second cell is a blind handover neighboring cell of the first cell or a same coverage inter-frequency neighboring cell of the first cell.

In a sixth possible implementation manner of the second aspect, with reference to the fourth possible implementation manner of the second aspect, the redirecting unit is specifically configured to:
determine, according to the cell update request message, the service type of the service requested by the user equipment, where the service type includes a real-time service or a non-real-time service; and
when the first cell is a non-preferential camping cell, if it is determined that the service type of the service is a real-time service, determine to redirect the user equipment to the second cell or the second frequency channel number, where the second cell is a blind handover neighboring cell of the first cell or a same coverage inter-frequency neighboring cell of the first cell.

In a seventh possible implementation manner of the second aspect, with reference to the second aspect, the redirecting unit is specifically configured to:
determine, based on downlink power load of the first cell, to redirect the user equipment to the second cell or the second frequency channel number.

In an eighth possible implementation manner of the second aspect, with reference to the seventh possible implementation manner of the second aspect, the redirecting unit is specifically configured to:
if it is determined that the downlink power load of the first cell is greater than or equal to a second redirection out threshold, and
downlink power load of the second cell is less than or equal to a second redirection in threshold, or if it is determined that a difference between the downlink power load of the second cell and the downlink power load of the first cell is greater than a second relative redirection threshold, determine to redirect the user equipment to the second cell, where the second cell is a blind handover neighboring cell of the first cell or a same coverage inter-frequency neighboring cell of the first cell.

In a ninth possible implementation manner of the second aspect, with reference to the seventh possible implementation manner of the second aspect, the redirecting unit is specifically configured to:
if it is determined that the downlink power load of the first cell is greater than or equal to a second redirection out threshold, determine to redirect the user equipment to the second frequency channel number.

According to a third aspect, an embodiment of the present invention provides an RNC, including:
a receiver, configured to receive a cell update request message that is sent, in a first cell, by a user equipment in a paging channel PCH state or a forward access channel FACH state, where the PCH state includes a cell_paging channel CELL_PCH and a registration area_paging channel URA_PCH, and the FACH state includes a cell_forward access channel CELL_FACH;
a processor, configured to determine, according to a preset policy, to redirect the user equipment to a second cell or a second frequency channel number; and
a transmitter, configured to send a cell update response message to the user equipment, where the cell update response message includes frequency channel number information and scrambling code information that are of the second cell or frequency channel number information of the second frequency channel number.

In a first possible implementation manner of the third aspect, with reference to the third aspect, the processor is specifically configured to:
determine, based on the number of users that are in the FACH state and located in the first cell, to redirect the user equipment to the second cell or the second frequency channel number.

In a second possible implementation manner of the third aspect, with reference to the first possible implementation manner of the third aspect, the processor is specifically configured to:
if it is determined that the number of users that are in the FACH state and located in the first cell is greater than or equal to a first redirection out threshold, and
the number of users that are in the FACH state and located in the second cell is less than or equal to a first redirection in threshold, or if it is determined that a difference between the number of users that are in the FACH state and located in the second cell and the number of users that are in the FACH state and located in the first cell is greater than a first relative redirection threshold, determine to redirect the user equipment to the second cell, where the second cell is a blind handover neighboring cell of the first cell or a same coverage inter-frequency neighboring cell of the first cell.

In a third possible implementation manner of the third aspect, with reference to the first possible implementation manner of the third aspect, the processor is specifically configured to:
if it is determined that the number of users that are in the FACH state and located in the first cell is greater than or equal to a first redirection out threshold, determine to redirect the user equipment to the second frequency channel number.

In a fourth possible implementation manner of the third aspect, with reference to the third aspect, the processor is specifically configured to:
redirect the user equipment to the second cell or the second frequency channel number based on a service type of a service requested by the user equipment.

In a fifth possible implementation manner of the third aspect, with reference to the fourth possible implementation manner of the third aspect, the processor is specifically configured to:
determine, according to the cell update request message, the service type of the service requested by the user equipment, where the service type includes a real-time service or a non-real-time service; and
when the first cell is a preferential camping cell, if it is determined that the service type of the service is a non-real-time service, determine to redirect the user equipment to the second cell or the second frequency channel number, where the second cell is a blind handover neighboring cell of the first cell or a same coverage inter-frequency neighboring cell of the first cell.

In a sixth possible implementation manner of the third aspect, with reference to the fourth possible implementation manner of the third aspect, the processor is specifically configured to:
determine, according to the cell update request message, the service type of the service requested by the user equipment, where the service type includes a real-time service or a non-real-time service; and
when the first cell is a non-preferential camping cell, if it is determined that the service type of the service is a real-time service, determine to redirect the user equipment to the second cell or the second frequency channel number, where the second cell is a blind handover neighboring cell of the first cell or a same coverage inter-frequency neighboring cell of the first cell.

In a seventh possible implementation manner of the third aspect, with reference to the third aspect, the processor is specifically configured to:
determine, based on downlink power load of the first cell, to redirect the user equipment to the second cell or the second frequency channel number.

In an eighth possible implementation manner of the third aspect, with reference to the seventh possible implementation manner of the third aspect, the processor is specifically configured to:
if it is determined that the downlink power load of the first cell is greater than or equal to a second redirection out threshold, and
downlink power load of the second cell is less than or equal to a second redirection in threshold, or if it is determined that a difference between the downlink power load of the second cell and the downlink power load of the first cell is greater than a second relative redirection threshold, determine to redirect the user equipment to the second cell, where the second cell is a blind handover neighboring cell of the first cell or a same coverage inter-frequency neighboring cell of the first cell.

In a ninth possible implementation manner of the third aspect, with reference to the seventh possible implementation manner of the third aspect, the processor is specifically configured to:
if it is determined that the downlink power load of the first cell is greater than or equal to a second redirection out threshold, determine to redirect the user equipment to the second frequency channel number.

According to a redirection method, a device, and a system that are provided in the embodiments of the present invention, an RNC receives a cell update request message that is sent, in a first cell, by a user equipment in a paging channel PCH state or a forward access channel FACH state, where the PCH state includes a cell_paging channel CELL_PCH and a registration area_paging channel URA_PCH, and the FACH state includes a cell_forward access channel CELL_FACH; determines, according to a preset policy, to redirect the user equipment to a second cell or a second frequency channel number; and sends a cell update response message to the user equipment, where the cell update response message includes frequency channel number information and scrambling code information that are of the second cell or frequency channel number information of the second frequency channel number, which can implement redirection of the user equipment in the PCH state or the FACH state, avoid a redirection failure, and improve system capacity and service quality.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a networking scenario according to an embodiment of the present invention;
FIG. 2 is a flowchart of a redirection method according to an embodiment of the present invention;
FIG. 3 is a flowchart of another redirection method according to another embodiment of the present invention;
FIG. 4 is a flowchart of another redirection method according to another embodiment of the present invention;
FIG. 5 is a flowchart of another redirection method according to another embodiment of the present invention;
FIG. 6 is a flowchart of another redirection method according to another embodiment of the present invention;
FIG. 7 is a schematic diagram of another networking scenario according to an embodiment of the present invention;
FIG. 8 is a structural diagram of an RNC apparatus according to an embodiment of the present invention; and
FIG. 9 is a structural diagram of another RNC apparatus according to an embodiment of the present invention.

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions provided in the embodiments of the present invention may be applied to various wireless communications networks, for example, Global System for Mobile Communications (global system for mobile communication, GSM for short), a Code Division Multipoint Access (code division multipoint access, CDMA for short) system, a Wideband Code Division Multiple Access (wideband code division multiple access, WCDMA for short) system, a Universal Mobile Telecommunications System (universal mobile telecommunication system, UMTS for short) system, a General Packet Radio Service (general packet radio service, GPRS for short) system, a Long Term Evolution (long term evolution, LTE for short) system, a Long Term Evolution Advanced (long term evolution advanced, LTE-A for short) system, and a Worldwide Interoperability for Microwave Access (worldwide iInteroperability for microwave access, WiMAX for short) system. The terms "network" and "system" may be mutually interchangeable.

In the embodiments of the present invention, a base station (base station, BS for short) may be a device that performs communication with a user equipment (user equipment, UE for short) or another communications station, such as a relay station, and the base station may provide communication coverage of a specific physical area. For example, the base station may be specifically a base transceiver station (Base Transceiver Station, BTS for short) or a base station controller (Base Station Controller, BSC for short) in GSM or CDMA, may also be a node B (Node B, NB for short) in UMTS or a radio network controller (Radio Network Controller, RNC for short) in UMTS, may also be an evolutional Node B (Evolutional Node B, ENB or eNodeB for short) in LTE, or may also be another access network device that provides an access service in the wireless communications network, which is not limited in the present invention.

In the embodiments of the present invention, a UE may be distributed in an entire wireless network and each UE may be still or moving. The UE may be referred to as a terminal (terminal), a mobile station (mobile station), a subscriber unit (subscriber unit), a station (station), or the like. The UE may be a cellular phone (cellular phone), a personal digital assistant (personal digital assistant, PDA for short), a wireless modem (modem), a wireless communications device, a handheld device (handheld), a laptop computer (laptop computer), a cordless phone (cordless phone), a wireless local loop (wireless local loop, WLL for short) station, or the like. When the UE is applied to communication in an M2M manner, the UE may be referred to as an M2M terminal, and may be specifically a smart electricity meter or a smart appliance that supports M2M communication, or the like.

The embodiments of the present invention separately give descriptions from a base station side and a user equipment side, and an embodiment in which the base station and the user equipment cooperate is also described. However, this does not mean that the base station and the user equipment must cooperate for implementation. Actually, when the base station and the user equipment separately implement a method, a problem that separately exists on a network side and the user equipment side is resolved, but better technical effect can be achieved when the base station and the user equipment are used together.

That a base station is merely an RNC is used as an example in the following embodiments for description, but this does not constitute a limitation on the base station.

According to one aspect, an embodiment of the present invention provides a schematic flowchart of a redirection method. Referring to FIG. 2, the method includes the following steps:
201. An RNC receives a cell update request message that is sent, in a first cell, by a user equipment in a PCH state or an FACH state, where the PCH state includes a cell_paging channel (Cell_Paging Channel, CELL_PCH for short) and a registration area_paging channel (UTRAN Registration Area_Paging Channel, URA_PCH for short), and the FACH state includes a cell_forward access channel (Cell_Forward Access Channel, CELL_FACH for short).
   The first cell is a cell that the UE currently accesses.
   The first cell may be a preferential camping cell, and may also be a non-preferential camping cell. The preferential camping cell refers to, in a preferential camping networking manner, a cell on which the UE preferentially camps when the UE is idle, and the non-preferential camping cell refers to a cell on which the UE does not preferentially camp when the UE is idle.
202. Determine, according to a preset policy, to redirect the user equipment to a second cell or a second frequency channel number.

The second cell is a blind handover neighboring cell of the first cell or a same coverage inter-frequency neighboring cell of the first cell. The second frequency channel number is a redirection frequency channel number that is configured by a system.

A redirection target of the user equipment may be a cell, and may also be a frequency channel number. It may be determined, according to a system configuration, whether the user equipment is redirected to a cell or a frequency channel number.

The RNC may redirect the user equipment to the second cell or the second frequency channel number based on the number of users that are in the FACH state and located in the first cell, and may also redirect the user equipment to the second cell or the second frequency channel number based on a service type of a service requested by the user equipment, and may also redirect the user equipment to the second cell or the second frequency channel number based on downlink power load of the first cell, and certainly may also redirect the user equipment to the second cell or the second frequency channel number based on a combination of the foregoing methods. For example, the user equipment may be redirected to the second cell or the second frequency channel number based on a combination of the number of users that are in the FACH state and located in the first cell and the service type of the service requested by the user equipment. For another example, the user equipment may also be redirected to the second cell or the second frequency channel number based on a combination of the downlink power load of the first cell and the service type of the service requested by the user equipment, which is not specifically limited in this embodiment of the present invention, and may be selected for use according to an actual requirement.

Exemplarily, various policies are separately described below.

1. The redirecting the user equipment to the second cell based on the number of users that are in the FACH state and located in the first cell includes:
if it is determined that the number of users that are in the FACH state and located in the first cell is greater than or equal to a first redirection out threshold, and
the number of users that are in the FACH state and located in the second cell is less than or equal to a first redirection in threshold, or if it is determined that a difference between the number of users that are in the FACH state and located in the second cell and the number of users that are in the FACH state and located in the first cell is greater than a first relative redirection threshold, determining to redirect the user equipment to the second cell.

The first redirection out threshold indicates a critical value of the number of users that are in the FACH state and located in the first cell, where the user equipment can be redirected to another cell. When the number of users that are in the FACH state and located in the first cell is greater than or equal to the first redirection out threshold, it indicates that load of an FACH channel of the first cell is relatively heavy, and by means of redirection, load sharing may be performed on another cell to improve utilization of the FACH channel, thereby improving system capacity. The first redirection out threshold may be preset by the system. For example, the system may set the first redirection out threshold according to a load condition of the FACH channel when the first cell is busy. If the load of the FACH channel is relatively heavy when the first cell is busy, the first redirection out threshold may be set to a smaller value, so that more user equipments can be redirected to another cell for load sharing; and if the load of the FACH channel is relatively light when the first cell is busy, the first redirection out threshold may be set to a larger value. It should be noted that the load condition of the FACH channel when the first cell is busy may be predefined or obtained in advance by the system, but this does not indicate a real-time load condition of the FACH channel of the first cell.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of FACH users may be selected as the second cell. For example, the multiple blind handover neighboring cells of the first cell or the multiple same coverage inter-frequency neighboring cells of the first cell may be sorted by the number of FACH users, and the cell with a least number of FACH users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

The first redirection in threshold indicates a critical value of the number of users that are in the FACH state and located in the second cell, where the second cell can accept redirection of a user equipment from another cell. When the number of users that are in the FACH state and located in the second cell is less than or equal to the first redirection in threshold, it indicates that load of an FACH channel of the second cell is relatively light, and load sharing may be performed on another cell to improve utilization of the FACH channel, thereby improving system capacity. The first redirection in threshold may be set by the system. For example, the system may set the first redirection in threshold according to a load condition of the FACH channel when the second cell is busy. If the load of the FACH channel is relatively light when the second cell is busy, the first redirection in threshold may be set to a larger value, so that more user equipments can be accepted to be redirected to this cell for load sharing; and if the load of the FACH channel is relatively heavy when the second cell is busy, the first redirection in threshold may be set to a smaller value. It should be noted that the load condition of the FACH channel when the second cell is busy may be predefined or obtained in advance by the system, but this does not indicate a real-time load condition of the FACH channel of the second cell.

The first relative redirection threshold indicates a critical value of a difference between the number of FACH users in the second cell and the number of FACH users in the first cell, where the user equipment in the first cell can be redirected to the second cell. For example, if the first relative redirection threshold is 5 and the number of FACH users in the first cell is 30, when the number of FACH users in the second cell is 0 to 25, the user equipment in the first cell can be redirected to the second cell, and when the number of FACH users in the second cell is greater than 25, the user equipment in the first cell cannot be redirected to the second cell. A value of the first relative redirection threshold may be preset by the system according to a load condition of the FACH channel when the second cell is busy. For example, if the load of the FACH channel is relatively heavy when the second cell is busy, the first relative redirection threshold may be set to a larger value to make it harder to redirect the user equipment in the first cell to the second cell. It should be noted that the load condition of the FACH channel when the second cell is busy may be predefined or obtained in advance by the system, but this does not indicate a real-time load condition of the FACH channel of the second cell.

The RNC may redirect the user equipment to the second cell or the second frequency channel number by means of P2F redirection, and a target status of the user equipment in the CELL_PCH state or the URA_PCH state is the CELL_FACH state after the redirection.

2. The determining, based on the number of users that are in the FACH state and located in the first cell, to redirect the user equipment to the second frequency channel number may include:
if it is determined that the number of users that are in the FACH state and located in the first cell is greater than or equal to a first redirection out threshold, determining to redirect the user equipment to the second frequency channel number. For example, the user equipment may be redirected to the second cell or the second frequency channel number by means of the P2F redirection.

3. The redirecting the user equipment to the second cell or the second frequency channel number based on a service type of a service requested by the user equipment may include:
determining, according to the cell update request message, the service type of the service requested by the user equipment, where the service type includes a real-time service (real-time traffic, RT for short) or a non-real-time service (non-real-time traffic, NRT for short); and
when the first cell is a preferential camping cell, if it is determined that the service type of the service is a non-real-time service, determining to redirect the user equipment to the second cell or the second frequency channel number; or
when the first cell is a non-preferential camping cell, if it is determined that the service type of the service is a real-time service, determining to redirect the user equipment to the second cell or the second frequency channel number. For example, when the user equipment is in the CELL_PCH state or the URA_PCH state, the user equipment may be redirected to the second cell or the second frequency channel number by means of the P2F redirection; and when a status of the user equipment is the CELL_FACH state, the user equipment may be redirected to the second cell or the second frequency channel number by means of F2P redirection, where the F2P redirection refers to redirection from the CELL_FACH state to the CELL_PCH state or the URA_PCH state, and the F2P redirection can reduce a cell update procedure, reduce signaling load of a control plane of the RNC, and reduce bandwidth occupation of the FACH.

The RNC may determine whether a service initiated by the user equipment is a non-real-time service or a real-time service by using a message cell carried in the cell update request.

The message cell carried in the cell update request may include a cell update cause (Cell update cause) and a service establishment cause (Establishment cause). A value of the cell update cause (Cell update cause) may include: uplink data transmission, paging response, cell reselection, and the like. A value of the service establishment cause may include: a calling interaction service, a calling background service, calling high priority signaling, a called interaction service, a called background service, called high priority signaling, a customization service, a calling session service, a called session service, and the like. Exemplarily, for details about the non-real-time service, refer to Table 1, and for the real-time service, refer to Table 2.

**Table 1**

| **Cell update cause (Cell update cause)** | **Service establishment cause (Establishment cause)** | **Terminal protocol release** | **Service identification result** |
|---|---|---|---|
| Uplink data transmission Paging response | Calling interaction service | R5-v590 and later release | Non-real-time service |
| | Calling background service | | |
| | Calling high priority signaling | | |
| | Called interaction service | | |
| | Called background service | | |
| | Called high priority signaling | | |
| | Customization service | | |
| Uplink data transmission Paging response | Non-carried | R5-v590 and later release | Non-real-time service |

The terminal protocol release in Table 1 refers to a release of a protocol used by the cell update request. The "R5-v590" refers to V5.9.0 of a release 5 (Release 5), and the service establishment cause (establishment cause) is introduced in this version.

For example, according to Table 1, if it is determined that the cell update cause (Cell update cause) carried in the cell update request is paging response and the service establishment cause (Establishment cause) is calling high priority signaling, it may be determined that the service requested by the user equipment is a non-real-time service.

**Table 2**

| **Cell update cause (Cell update cause)** | **Service establishment cause (Establishment cause)** | **Terminal protocol release** | **Service identification result** |
|---|---|---|---|
| Uplink data transmission Paging response | Calling session service | R5-v590 and later release | Real-time service |
| | Called session service | | |

For example, according to Table 2, if it is determined that the cell update cause (Cell update cause) carried in the cell update request is paging response and the service establishment cause (Establishment cause) is calling session service, it may be determined that the service requested by the user equipment is a real-time service.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of HSDPA (High Speed Downlink Packet Access, HSDPA for short) users may be selected as the second cell. For example, the multiple blind handover neighboring cells of the first cell or the multiple same coverage inter-frequency neighboring cells of the first cell may be sorted by the number of HSDPA users, and the cell with a least number of HSDPA users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

3. The determining, based on downlink power load of the first cell, to redirect the user equipment to the second cell may include:
if it is determined that the downlink power load of the first cell is greater than or equal to a second redirection out threshold, and
downlink power load of the second cell is less than or equal to a second redirection in threshold, or if it is determined that a difference between the downlink power load of the second cell and the downlink power load of the first cell is greater than a second relative redirection threshold, determining to redirect the user equipment to the second cell.

The second redirection out threshold indicates a critical value of the downlink power load of the first cell from which the user equipment can be redirected to another cell. When the downlink power load of the first cell is greater than or equal to the second redirection out threshold, it indicates that downlink load of the first cell is relatively heavy, and by means of redirection, load sharing may be performed by another cell to improve system capacity. The second redirection out threshold may be preset by the system. For example, the system may set the second redirection out threshold according to a downlink power load condition when the first cell is busy. If the downlink power load is relatively heavy when the first cell is busy, the second redirection out threshold may be set to a smaller value, so that more user equipments in the first cell can be redirected to another cell for load sharing; and if the downlink power load of the first cell is relatively light, the second redirection out threshold may be set to a larger value. It should be noted that the downlink power load condition when the first cell is busy may be predefined or obtained in advance by the system, but this does not indicate a real-time downlink power load condition of the first cell.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of HSDPA users may be selected as the second cell. For example, the multiple blind handover neighboring cells of the first cell or the multiple same coverage inter-frequency neighboring cells of the first cell may be sorted by the number of HSDPA users, and the cell with a least number of HSDPA users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

The second redirection in threshold indicates a critical value of the downlink power load of the second cell, where the second cell can accept redirection of a user equipment from another cell. When the downlink power load of the second cell is less than or equal to the second redirection in threshold, it indicates that the downlink power load of the second cell is relatively light, and load sharing may be performed on another cell to improve capacity of a multicarrier cell. The second redirection in threshold may be preset by the system. For example, the system may set the second redirection in threshold according to a downlink power load condition when the second cell is busy. If the load of the downlink power load is relatively heavy when the second cell is busy, the second redirection out threshold may be set to a smaller value; and if the load of the downlink power load is relatively light when the second cell is busy, the second redirection out threshold may be set to a smaller value, so that more user equipments can be accepted to be redirected to the second cell for load sharing. It should be noted that the downlink power load condition when the second cell is busy is predefined or obtained in advance by the system, but this does not indicate a real-time downlink power load condition of the second cell.

The second relative redirection threshold indicates a critical value of a difference between the downlink power load of the second cell and the downlink power load of the first cell, where the user equipment in the first cell can be redirected to the second cell. For example, if the second relative redirection threshold is 5 and the downlink power load of the first cell is 30, when the downlink power load of the second cell is 0 to 25, the user equipment in the first cell can be redirected to the second cell, and when the downlink power load of the second cell is greater than 25, the user equipment in the first cell cannot be redirected to the second cell. A value of the second relative redirection threshold may be preset by the system according to a load situation of the downlink power load when the second cell is busy. For example, if the load of the downlink power load is relatively heavy when the second cell is busy, the second relative redirection threshold may be set to a larger value to make it harder to redirect the user equipment in the first cell to the second cell. It should be noted that the load condition of the downlink power load when the second cell is busy is predefined or obtained in advance by the system, but this does not indicate a real-time load condition of the downlink power load of the second cell.

4. The determining, based on downlink power load of the first cell, to redirect the user equipment to the second frequency channel number may include:
if it is determined that the downlink power load of the first cell is greater than or equal to a second redirection out threshold, determining to redirect the user equipment to the second frequency channel number.

5. When a status of the user equipment is the CELL_FACH state and the first cell is a non-preferential camping cell, the redirecting the user equipment to a second cell or a second frequency channel number according to a preset policy includes: if it is determined that a direct transfer message of a CS domain exists in uplink data of the user equipment or an RAB assignment of a CS domain core network is received, determining to redirect the user equipment to the second cell or the second frequency channel number by means of F2F redirection.

The F2F redirection can enhance real-time service experience and reduce impact from a non-real-time service on quality of a real-time service.

203. Send a cell update response message to the user equipment, where the cell update response message includes frequency channel number information and scrambling code information that are of the second cell or frequency channel number information of the second frequency channel number.

The UE may search for the second cell according to the received frequency channel number information and the received scrambling code information that are of the second cell, or the UE may search for a cell in the second frequency channel number according to the received frequency channel number information of the second frequency channel number. Therefore, in a case in which the first cell and the second cell or the first cell and a cell on the second frequency channel number do not have same coverage, the UE is successfully redirected to the second cell or the second frequency channel number, and a redirection failure is avoided.

Further, the method may further include:
receiving a cell update request sent in a cell that has best signal quality and is found by the user equipment in the second cell or by the user equipment on the second frequency channel number; and
processing, in the cell that has best signal quality and is found by the user equipment in the second cell or on the second frequency channel number, the cell update request that is sent by the user equipment, so that an RRC connection is established in the cell that has best signal quality and is found by the user equipment in the second cell or by the user equipment on the second frequency channel number.

According to a redirection method provided in this embodiment of the present invention, a cell update request message that is sent, in a first cell, by a user equipment in a PCH state or an FACH state is received, where the PCH state includes a cell_paging channel CELL_PCH and a registration area_paging channel URA_PCH, and the FACH state includes a cell_forward access channel CELL_FACH; that the user equipment is redirected to a second cell or a second frequency channel number is determined according to a preset policy; and a cell update response message is sent to the user equipment, where the cell update response message includes frequency channel number information and scrambling code information that are of the second cell or frequency channel number information of the second frequency channel number, which can implement redirection of the user equipment in the PCH state or the FACH state, avoid a redirection failure, and improve system capacity and service quality.

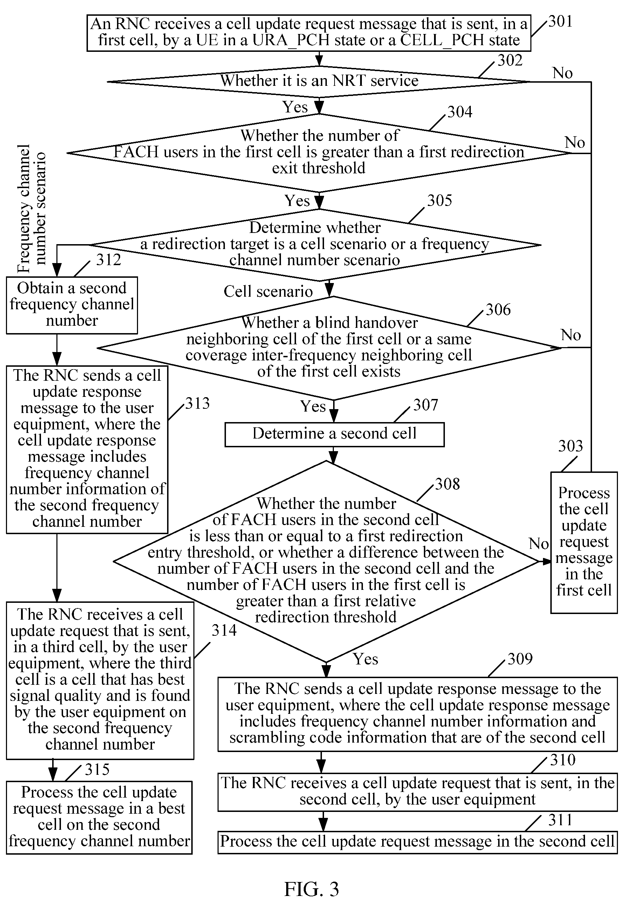

The following uses a specific embodiment to describe the foregoing method. Referring to FIG. 3, the method includes the following steps:
301. An RNC receives a cell update request that is sent, in a first cell, by a UE in a URA_PCH state or a CELL_PCH state.
   This embodiment may be applied to implement redirection of service layering in various networking cases, which is merely exemplary. A macro-micro networking case shown in FIG. 1 is still used herein for description. Multiple cells may be configured in the RNC, where, as shown in FIG. 1, the multiple cells include an F1 macro cell, an F2 macro cell, and an F2 micro cell. In this embodiment, it is assumed that the F1 macro cell is the first cell, that is, the UE in an initial state accesses the F1 macro cell. It is assumed that the UE in the URA_PCH state or the CELL_PCH state sends the cell update request in the F1 macro cell, and the F1 macro cell may be a preferential camping cell.
302. The RNC determines whether a service requested by the user equipment is an NRT service; if yes, performs step 304, and if no, performs step 303.
   The RNC may determine, according to a message cell in the cell update request, whether the service requested by the user equipment is an NRT service. For a specific process, refer to the foregoing embodiment, and details are not described herein again.
303. The RNC processes a cell update request message in the first cell.
304. Determine whether the number of FACH users in the first cell is greater than or equal to a first redirection out threshold; if yes, perform step 305, and if no, perform step 303.
   The number of FACH users in the first cell may reflect a load condition of an FACH channel. If the number of FACH users in the first cell is greater than or equal to the first redirection out threshold, it indicates that the load of the FACH channel is relatively heavy and redirection needs to be performed.
305. Determine whether a redirection target is a cell scenario or a frequency channel number scenario; if the redirection target is a cell scenario, perform step 306, and if the redirection target is a frequency channel number scenario, perform step 312.
   For a method for determining whether the redirection target is a cell scenario or a frequency channel number scenario, refer to the foregoing embodiment, and details are not described herein again.
306. Determine whether a blind handover neighboring cell of the first cell or a same coverage inter-frequency neighboring cell of the first cell exists; if yes, perform step 307, and if no, perform step 303.
   It may be determined, according to a neighbor relationship of a cell that is configured by a system, whether the blind handover neighboring cell of the first cell or the same coverage inter-frequency neighboring cell of the first cell exists.
307. Determine a second cell.
   If one blind handover neighboring cell of the first cell or one same coverage inter-frequency neighboring cell of the first cell exists, it is determined that the blind handover neighboring cell of the first cell or the same coverage inter-frequency neighboring cell of the first cell is the second cell; and if two or more than two blind handover neighboring cells of the first cell or two or more than two same coverage inter-frequency neighboring cells of the first cell exist, a cell with a least number of FACH users is selected as the second cell.
   For example, it is assumed that two blind handover neighboring cells of the first cell or two same coverage inter-frequency neighboring cells of the first cell exist, such as the F2 macro cell and an F3 macro cell shown in FIG. 1, and preferably, the number of FACH users in the F2 macro cell may be compared with the number of FACH users in the F3 macro cell. If the number of FACH users in the F2 macro cell is less than the number of FACH users in the F3 macro cell, the F2 macro cell is selected as the second cell.
308. Determine whether the number of FACH users in the second cell is less than or equal to a first redirection in threshold, or whether a difference between the number of FACH users in the second cell and the number of FACH users in the first cell is greater than a first relative redirection threshold; if yes, perform step 309, and if no, perform step 303.
   If any one of the foregoing conditions is met, it may be considered that a result of the determining is yes, and if both two conditions are not met, then it may be considered that the result of the determining is no.
   It is determined whether the number of FACH users in the F2 macro cell is less than or equal to the first redirection in threshold. The number of FACH users in the F2 macro cell may reflect a load condition of an FACH channel of the F2 macro cell, if the number of FACH users in the F2 macro cell is less than or equal to the first redirection in threshold, it indicates that load of the FACH channel of the F2 macro cell is relatively light, and redirection of a user equipment from another cell can be accepted.
   The first relative redirection threshold indicates a critical value of the difference between the number of FACH users in the F2 macro cell and the number of FACH users in the F1 macro cell, where the user equipment in the F1 macro cell can be redirected to the F2 macro cell. For example, if the first relative redirection threshold is 5 and the number of FACH users in the F1 macro cell is 30, when the number of FACH users in the F2 macro cell is 0 to 25, the user equipment in the F1 macro cell can be redirected to the F2 macro cell, and when the number of FACH users in the F2 macro cell is greater than 25, the user equipment in the F1 macro cell cannot be redirected to the F2 macro cell.
309. The RNC sends a cell update response message to the user equipment, where the cell update response message includes frequency channel number information and scrambling code information that are of the second cell.
310. The RNC receives a cell update request that is sent, in a target cell, by the user equipment.
311. The RNC processes the cell update request message in the second cell.
312. If the redirection target is a frequency channel number scenario, obtain a second frequency channel number.
   The RNC may obtain the second frequency number by using a system configuration.
313. The RNC sends a cell update response message to the user equipment, where the cell update response message includes frequency channel number information of the second frequency channel number.
314. The RNC receives a cell update request that is sent, in a third cell, by the user equipment, where the third cell is a cell that has best signal quality and is found by the user equipment on the second frequency channel number.
315. The RNC processes the cell update request in the third cell.

According to a redirection method provided in this embodiment of the present invention, an RNC receives a cell update request message that is sent, in a first cell, by a user equipment, redirects, according to the number of FACH user in the first cell, the user equipment to a second cell or a second frequency number by means of P2F redirection, and sends a cell update response message to the user equipment, where the cell update response message includes frequency channel number information and scrambling code information that are of the second cell or the second frequency channel number, which can implement redirection of a user equipment in a PCH state, and improve a utilization rate of an FACH channel, thereby improving system capacity, and avoid a redirection failure.

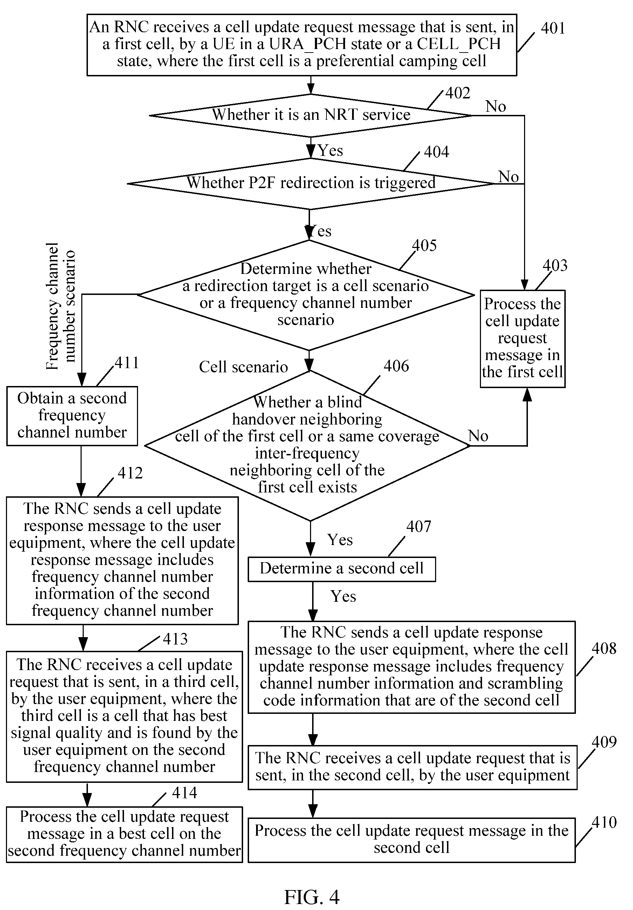

Referring to FIG. 4, which shows another specific embodiment, this embodiment of the present invention gives a description of P2F redirection of a non-real-time service, and includes the following steps:
401. An RNC receives a cell update request that is sent, in a first cell, by a UE in a URA_PCH state or a CELL_PCH state, where the first cell is a preferential camping cell.
   This embodiment may be applied to implement redirection of service layering in various networking cases, which is merely exemplary. A macro-micro networking case shown in FIG. 1 is still used herein for description. Multiple cells may be configured in the RNC, where, as shown in FIG. 1, the multiple cells include an F1 macro cell, an F2 macro cell, and an F2 micro cell. In this embodiment, it is assumed that the F1 macro cell is the first cell and the F1 macro cell is a preferential camping cell.
402. Determine whether a service requested by the user equipment is an NRT service; if yes, perform step 404, and if no, perform step 403.
   The RNC may determine, according to a message cell in the cell update request, whether the service requested by the user equipment is an NRT service. For a specific process, refer to the foregoing embodiment, and details are not described herein again.
403. Process a cell update request message in the first cell.
404. Determine whether P2F redirection is triggered; if yes, perform step 405, and if no, perform step 403.
   Enabling P2F for a non-real-time service may be set in the F1 macro cell. If a status of enabling P2F for the non-real-time service in the F1 macro cell is enabled, it indicates that the P2F redirection needs to be triggered, and if the status of enabling P2F for the non-real-time service in the F1 macro cell is disabled, it indicates that the P2F redirection does not need to be triggered.
405. Determine whether a redirection target is a cell scenario or a frequency channel number scenario; if the redirection target is a cell scenario, perform step 406, and if the redirection target is a frequency channel number scenario, perform step 411.
406. Determine whether a blind handover neighboring cell of the first cell or a same coverage inter-frequency neighboring cell of the first cell exists; if yes, perform step 407, and if no, perform step 403.
   It may be determined, according to a neighbor relationship of a cell that is configured by a system, whether the blind handover neighboring cell of the first cell or the same coverage inter-frequency neighboring cell of the first cell exists.
407. Determine a second cell.
   For example, it is assumed that two blind handover neighboring cells of the first cell or two same coverage inter-frequency neighboring cells of the first cell exist, such as the F2 macro cell and an F3 macro cell shown in FIG. 1, and preferably, the number of HSDPA users in the F2 macro cell may be compared with the number of the HSDPA users in the F3 macro cell. If the number of HSDPA users in the F2 macro cell is less than the number of HSDPA users in the F3 macro cell, the F2 macro cell is selected as the second cell.
408. The RNC sends a cell update response message to the user equipment, where the cell update response message includes frequency channel number information and scrambling code information that are of the second cell.
409. The RNC receives a cell update request that is sent, in the second cell, by the user equipment.
410. The RNC processes a cell update request message in the second cell.
411. If the redirection target is a frequency channel number scenario, obtain a second frequency channel number.
   When the redirection target is a frequency channel number scenario, the RNC may obtain the second frequency channel number by using a system configuration.
412. The RNC sends a cell update response message to the user equipment, where the cell update response message includes frequency channel number information of the second frequency channel number.
413. The RNC receives a cell update request that is sent, in a third cell, by the user equipment, where the third cell is a cell that has best signal quality and is found by the user equipment on the second frequency channel number.
414. The RNC processes the cell update request in the third cell.

According to a redirection method provided in this embodiment of the present invention, an RNC receives a cell update request message that is sent, in a first cell, by a user equipment, redirects the user equipment to a second cell or a second frequency number according to a service type of a service requested by the user equipment, and sends a cell update response message to the user equipment, where the cell update response message includes frequency channel number information and scrambling code information that are of the second cell or the second frequency channel number, which can implement redirection of a user equipment in a PCH state, enhance real-time service experience, and reduce impact from a non-real-time service on quality of a real-time service, thereby improving system capacity, and avoid a redirection failure.

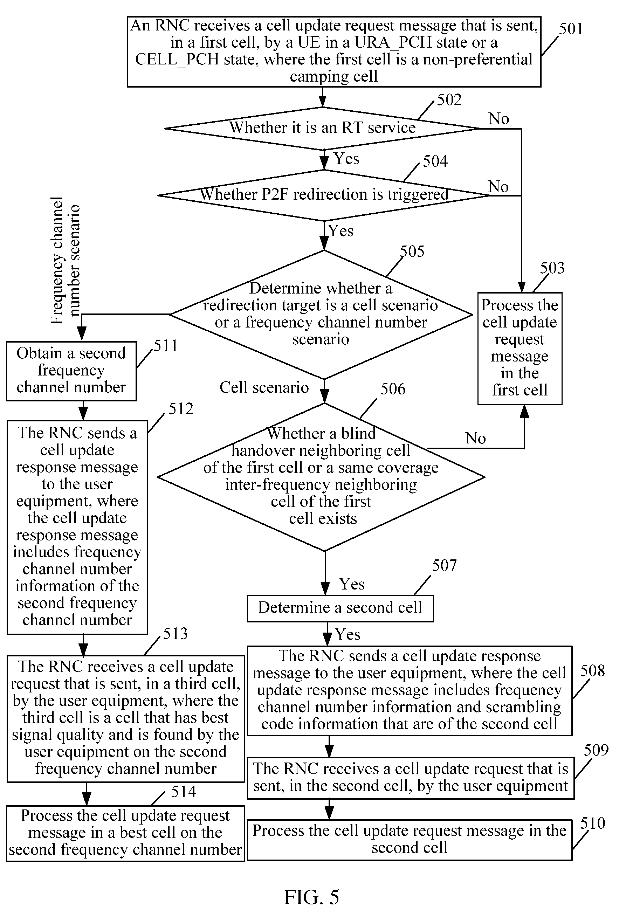

Referring to FIG. 5, which shows another specific embodiment, principles and steps of this embodiment are similar to that of the embodiment shown in FIG. 4. A difference is that, P2F redirection of a real-time service is described in this embodiment of the present invention, and only different parts are described in this embodiment. Referring to FIG. 5, this embodiment includes the following steps:
501. An RNC receives a cell update request that is sent, in a first cell, by a UE in a URA_PCH state or a CELL_PCH state, where the first cell is a non-preferential camping cell.
   This embodiment may be applied to implement redirection of service layering in various networking cases, which is merely exemplary. A macro-micro networking case shown in FIG. 1 is still used herein for description. Multiple cells may be configured in the RNC, where, as shown in FIG. 1, the multiple cells include an F1 macro cell, an F2 macro cell, and an F2 micro cell. In this embodiment, it is assumed that the first cell is the F2 macro cell and the F2 macro cell is a non-preferential camping cell.
502. Determine whether a service requested by the user equipment is an RT service; if yes, perform step 504, and if no, perform step 503.
   The RNC may determine, according to a message cell in the cell update request, whether the service requested by the user equipment is an RT service. For a specific process, refer to the foregoing embodiment, and details are not described herein again.
503. Process a cell update request message in the first cell.
504. Determine whether P2F redirection is triggered; if yes, perform step 505, and if no, perform step 503.
505. Determine whether a redirection target is a cell scenario or a frequency channel number scenario; if the redirection target is a cell scenario, perform step 506, and if the redirection target is a frequency channel number scenario, perform step 511.
506. Determine whether a blind handover neighboring cell of the first cell or a same coverage inter-frequency neighboring cell of the first cell exists; if yes, perform step 507, and if no, perform step 503.
   It may be determined, according to a system configuration, whether the blind handover neighboring cell of the first cell or the same coverage inter-frequency neighboring cell of the first cell exists.
507. Determine a second cell.
   Referring to FIG. 1, it is assumed that two blind handover neighboring cells of the first cell or two same coverage inter-frequency neighboring cells of the first cell exist, which are respectively the F1 macro cell and the F3 macro cell, and preferably, the number of HSDPA users in the F1 macro cell may be compared with the number of the HSDPA users in the F3 macro cell. If the number of HSDPA users in the F1 macro cell is less than the number of HSDPA users in the F3 macro cell, the F1 macro cell is selected as the second cell.
508. The RNC sends a cell update response message to the user equipment, where the cell update response message includes frequency channel number information and scrambling code information that are of the second cell.
509. The RNC receives a cell update request that is sent, in the second cell, by the user equipment.
510. The RNC processes the cell update request in the second cell.
511. If the target scenario is a frequency channel number scenario, obtain a second frequency channel number.
   When the redirection target is a frequency channel number scenario, the RNC may obtain the second frequency channel number by using a system configuration.
512. The RNC sends a cell update response message to the user equipment, where the cell update response message includes frequency channel number information of the second frequency channel number.
513. The RNC receives a cell update request that is sent, in a third cell, by the user equipment, where the third cell is a cell that has best signal quality and is found by the user equipment on the second frequency channel number.
514. The RNC processes the cell update request in the third cell.

According to a redirection method provided in this embodiment of the present invention, an RNC receives a cell update request message that is sent, in a first cell, by a user equipment, redirects the user equipment to a second cell or a second frequency number according to a service type of a service requested by the user equipment, and sends a cell update response message to the user equipment, where the cell update response message includes frequency channel number information and scrambling code information that are of the second cell or the second frequency channel number, which can implement redirection of a user equipment in a PCH state, enhance real-time service experience, and reduce impact from a non-real-time service on quality of a real-time service, thereby improving system capacity, and avoid a redirection failure.

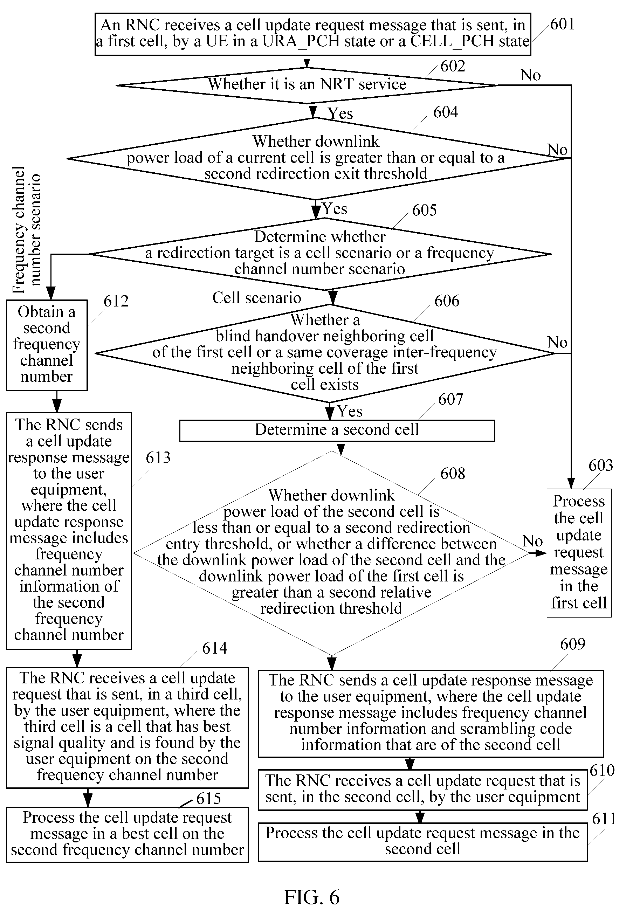

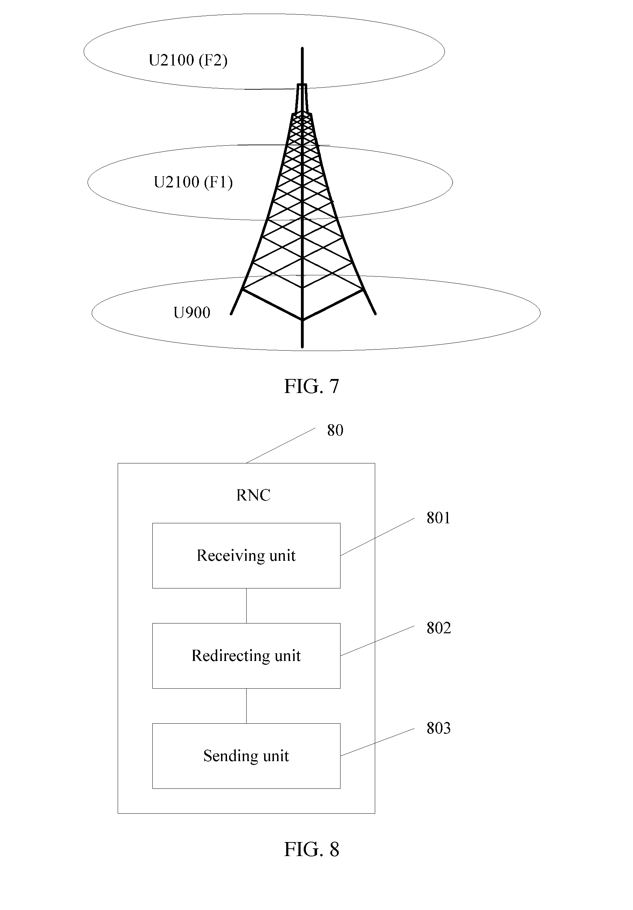

Referring to FIG. 6, which shows another specific embodiment, this embodiment includes the following steps:
601. An RNC receives a cell update request that is sent, in a first cell, by a UE in a URA_PCH state or a CELL_PCH state.
   This embodiment may be applied to implement redirection of service layering in various networking cases, which is merely exemplary. A multiband networking case shown in FIG. 8 is used herein for description. Multiple cells may be configured in the RNC, where, as shown in FIG. 1, the multiple cells include a U900 cell and a U2100 cell (an F1 cell and an F2 cell). Coverage of the U900 is larger than that of the U2100, and the U900 has better service continuity. An AMR real-time service is generally kept on the U900 for bearer, and the U900 cell may be a preferential camping cell. In this embodiment, it is assumed that the first cell is the U900 cell.
602. Determine whether a service requested by the user equipment is an NRT service; if yes, perform step 604, and if no, perform step 603.
   In this embodiment, P2F redirection is choosed to be triggered for a non-real-time service; if the service requested by the user equipment is a non-real-time service, the P2F redirection is triggered to ensure better experience of a real-time service, and if the service requested by the user equipment is not a non-real-time service, the P2F redirection is not triggered.
603. Process a cell update request message in the first cell.
604. Determine whether downlink power load of the first cell is greater than or equal to a second redirection out threshold; if yes, perform step 605, and if no, perform step 603.
   The downlink power load of the first cell may reflect a load condition of the downlink power. If the downlink power load of the first cell is greater than or equal to the second redirection out threshold, it indicates that the load of the downlink power is relatively heavy, and redirection needs to be performed.
605. Determine whether a redirection target is a cell scenario or a frequency channel number scenario; if the redirection target is a cell scenario, perform step 606, and if the redirection target is a frequency channel number scenario, perform step 612.
606. Determine whether a blind handover neighboring cell of the first cell or a same coverage inter-frequency neighboring cell of the first cell exists; if yes, perform step 607, and if no, perform step 603.
   It may be determined, according to a system configuration, whether the blind handover neighboring cell of the first cell or the same coverage inter-frequency neighboring cell of the first cell exists.
607. Determine a second cell.
   Referring to FIG. 7, it is assumed that two blind handover neighboring cells of the first cell or two same coverage inter-frequency neighboring cells of the first cell exist, which are respectively the F1 cell and the F2 cell, and preferably, the number of HSDPA users in the F1 cell may be compared with the number of the HSDPA users in the F2 cell. If the number of HSDPA users in the F1 cell is less than the number of HSDPA users in the F2 cell, the F1 cell is selected as the second cell.
608. Determine whether downlink power load of the second cell is less than or equal to a second redirection in threshold, or a difference between the downlink power load of the second cell and the downlink power load of the first cell is greater than a second relative redirection threshold; if yes, perform step 609, and if no, perform step 603.
   If any one of the foregoing conditions is met, it may be considered that a result of the determining is yes, and if both two conditions are not met, then it may be considered that the result of the determining is no.
   It is determined whether the downlink power load of the F1 cell is less than or equal to the second redirection in threshold, and the downlink power load of the F1 cell may reflect a load condition of the downlink power of the F1 cell. If the downlink power load of the F1 cell is less than or equal to the second redirection in threshold, it indicates that the load of the downlink power of the F1 cell is relatively light, and redirection of a user equipment from another cell can be accepted.
   The second relative redirection threshold indicates a critical value of a difference between the downlink power load of the F1 cell and downlink power load of the U900 cell, where the user equipment in the U900 cell can be redirected to the F1 cell. For example, if the second relative redirection threshold is 5 and the downlink power load of the U900 cell is 30, when the downlink power load of the F1 cell is 0 to 25, the user equipment in the U900 cell can be redirected to the F1 cell, and when the downlink power load of the F1 cell is greater than 25, the user equipment in the U900 cell cannot be redirected to the F1 cell.
609. The RNC sends a cell update response message to the user equipment, where the cell update response message includes frequency channel number information and scrambling code information that are of the second cell.
610. The RNC receives a cell update request that is sent, in the second cell, by the user equipment.
611. The RNC processes a cell update request message in the second cell.
612. If the target scenario is a frequency channel number scenario, obtain a second frequency channel number.
   The RNC may obtain the second frequency channel number according to a system configuration.
613. The RNC sends a cell update response message to the user equipment, where the cell update response message includes frequency channel number information of the second frequency channel number.
614. The RNC receives a cell update request that is sent, in a third cell, by the user equipment, where the third cell is a cell that has best signal quality and is found by the user equipment on the second frequency channel number.
615. The RNC processes the cell update request in the third cell.

According to a redirection method provided in this embodiment of the present invention, an RNC receives a cell update request message that is sent, in a first cell, by a user equipment, redirects the user equipment to a second cell or a second frequency number according to downlink power load of the first cell, and sends a cell update response message to the user equipment, where the cell update response message includes frequency channel number information and scrambling code information that are of the second cell or frequency channel number information of the second frequency channel number, which can implement redirection of a user equipment in a PCH state, thereby improving system capacity, and avoid a redirection failure.

According to one aspect, an embodiment of the present invention provides an RNC 80. Referring to FIG. 8, the RNC 80 includes:
a receiving unit 801, configured to receive a cell update request message that is sent, in a first cell, by a user equipment in a PCH state or an FACH state, where the PCH state includes CELL_PCH and URA_PCH, and the FACH state includes CELL_FACH;
a redirecting unit 802, configured to determine, according to a preset policy, to redirect the user equipment to a second cell or a second frequency channel number; and
a sending unit 803, configured to send a cell update response message to the user equipment, where the cell update response message includes frequency channel number information and scrambling code information that are of the second cell or frequency channel number information of the second frequency channel number.

The first cell is a cell that the UE currently accesses.

The first cell may be a preferential camping cell, and may also be a non-preferential camping cell. The preferential camping cell refers to, in a preferential camping networking manner, a cell on which the UE preferentially camps when the UE is idle, and the non-preferential camping cell refers to a cell on which the UE does not preferentially camp when the UE is idle.

The second cell is a blind handover neighboring cell of the first cell or a same coverage inter-frequency neighboring cell of the first cell. The second frequency channel number is a redirection frequency channel number that is configured by a system.

A redirection target of the user equipment may be a cell, and may also be a frequency channel number. It may be determined, according to a system configuration, whether the user equipment is redirected to a cell or a frequency channel number.

The redirecting unit 802 may redirect the user equipment to the second cell or the second frequency channel number based on the number of users that are in the FACH state and located in the first cell, and may also redirect the user equipment to the second cell or the second frequency channel number based on a service type of a service requested by the user equipment, and may also redirect the user equipment to the second cell or the second frequency channel number based on downlink power load of the first cell, and certainly may also redirect the user equipment to the second cell or the second frequency channel number based on a combination of the foregoing methods. For example, the user equipment may be redirected to the second cell or the second frequency channel number based on a combination of the number of users that are in the FACH state and located in the first cell and the service type of the service requested by the user equipment. For another example, the user equipment may also be redirected to the second cell or the second frequency channel number based on a combination of the downlink power load of the first cell and the service type of the service requested by the user equipment, which is not specifically limited in this embodiment of the present invention, and may be selected for use according to an actual requirement.

Various functions of the redirecting unit 802 are separately described below.

1. The redirecting unit 802 is configured to, if it is determined that the number of users that are in the FACH state and located in the first cell is greater than or equal to a first redirection out threshold, and
the number of users that are in the FACH state and located in the second cell is less than or equal to a first redirection in threshold, or if it is determined that a difference between the number of users that are in the FACH state and located in the second cell and the number of users that are in the FACH state and located in the first cell is greater than a first relative redirection threshold, determine to redirect the user equipment to the second cell.

The first redirection out threshold indicates a critical value of the number of users that are in the FACH state and located in the first cell, where the user equipment can be redirected to another cell. When the number of users that are in the FACH state and located in the first cell is greater than or equal to the first redirection out threshold, it indicates that load of an FACH channel of the first cell is relatively heavy, and by means of redirection, load sharing may be performed on another cell to improve utilization of the FACH channel, thereby improving system capacity. The first redirection out threshold may be preset by the system. For example, the system may set the first redirection out threshold according to a load condition of the FACH channel when the first cell is busy. If the load of the FACH channel is relatively heavy when the first cell is busy, the first redirection out threshold may be set to a smaller value, so that more user equipments can be redirected to another cell for load sharing; and if the load of the FACH channel is relatively light when the first cell is busy, the first redirection out threshold may be set to a larger value. It should be noted that the load condition of the FACH channel when the first cell is busy may be predefined or obtained in advance by the system, but this does not indicate a real-time load condition of the FACH channel of the first cell.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of FACH users may be selected as the second cell. For example, the multiple blind handover neighboring cells of the first cell or the multiple same coverage inter-frequency neighboring cells of the first cell may be sorted by the number of FACH users, and the cell with a least number of FACH users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

The first redirection in threshold indicates a critical value of the number of users that are in the FACH state and located in the second cell, where the second cell can accept redirection of a user equipment from another cell. When the number of users that are in the FACH state and located in the second cell is less than or equal to the first redirection in threshold, it indicates that load of an FACH channel of the second cell is relatively light, and load sharing may be performed on another cell to improve utilization of the FACH channel, thereby improving system capacity. The first redirection in threshold may be set by the system. For example, the system may set the first redirection in threshold according to a load condition of the FACH channel when the second cell is busy. If the load of the FACH channel is relatively light when the second cell is busy, the first redirection in threshold may be set to a larger value, so that more user equipments can be accepted to be redirected to this cell for load sharing; and if the load of the FACH channel is relatively heavy when the second cell is busy, the first redirection in threshold may be set to a smaller value. It should be noted that the load condition of the FACH channel when the second cell is busy may be predefined or obtained in advance by the system, but this does not indicate a real-time load condition of the FACH channel of the second cell.

The first relative redirection threshold indicates a critical value of a difference between the number of FACH users in the second cell and the number of FACH users in the first cell, where the user equipment in the first cell can be redirected to the second cell. For example, if the first relative redirection threshold is 5 and the number of FACH users in the first cell is 30, when the number of FACH users in the second cell is 0 to 25, the user equipment in the first cell can be redirected to the second cell, and when the number of FACH users in the second cell is greater than 25, the user equipment in the first cell cannot be redirected to the second cell. A value of the first relative redirection threshold may be preset by the system according to a load condition of the FACH channel when the second cell is busy. For example, if the load of the FACH channel is relatively heavy when the second cell is busy, the first relative redirection threshold may be set to a larger value to make it harder to redirect the user equipment in the first cell to the second cell. It should be noted that the load condition of the FACH channel when the second cell is busy may be predefined or obtained in advance by the system, but this does not indicate a real-time load condition of the FACH channel of the second cell.

The RNC may redirect the user equipment to the second cell or the second frequency channel number by means of P2F redirection, and a target status of the user equipment in the CELL_PCH state or the URA_PCH state is the CELL_FACH state after the redirection.

2. The redirecting unit 802 is configured to, if it is determined that the number of users that are in the FACH state and located in the first cell is greater than or equal to a first redirection out threshold, determine to redirect the user equipment to the second frequency channel number. For example, the user equipment may be redirected to the second cell or the second frequency channel number by means of the P2F redirection.

3. The redirecting unit 802 is configured to determine, according to the cell update request message, the service type of the service requested by the user equipment, where the service type includes an RT service or an NRT service;
when the first cell is a preferential camping cell, if it is determined that the service type of the service is a non-real-time service, determine to redirect the user equipment to the second cell or the second frequency channel number; or
when the first cell is a non-preferential camping cell, if it is determined that the service type of the service is a real-time service, determine to redirect the user equipment to the second cell or the second frequency channel number. For example, when the user equipment is in the CELL_PCH state or the URA_PCH state, the user equipment may be redirected to the second cell or the second frequency channel number by means of the P2F redirection; and when a status of the user equipment is the CELL_FACH state, the user equipment may be redirected to the second cell or the second frequency channel number by means of F2P redirection, where the F2P redirection refers to redirection from the CELL_FACH state to the CELL_PCH state or the URA_PCH state, and the F2P redirection can reduce a cell update procedure, reduce signaling load of a control plane of the RNC, and reduce bandwidth occupation of the FACH.

The RNC may determine whether a service initiated by the user equipment is a non-real-time service or a real-time service by using a message cell carried in the cell update request.

The message cell carried in the cell update request may include a cell update cause (Cell update cause) and a service establishment cause (Establishment cause). A value of the cell update cause (Cell update cause) may include: uplink data transmission, paging response, cell reselection, and the like. A value of the service establishment cause may include: a calling interaction service, a calling background service, calling high priority signaling, a called interaction service, a called background service, called high priority signaling, a customization service, a calling session service, a called session service, and the like. Exemplarily, for details about the non-real-time service, refer to Table 1, and for the real-time service, refer to Table 2, which are not described herein again.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of HSDPA (High Speed Downlink Packet Access, HSDPA for short) users may be selected as the second cell. For example, the multiple blind handover neighboring cells of the first cell or the multiple same coverage inter-frequency neighboring cells of the first cell may be sorted by the number of HSDPA users, and the cell with a least number of HSDPA users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

3. The redirecting unit 802 is configured to, if it is determined that the downlink power load of the first cell is greater than or equal to a second redirection out threshold, and
downlink power load of the second cell is less than or equal to a second redirection in threshold, or if it is determined that a difference between the downlink power load of the second cell and the downlink power load of the first cell is greater than a second relative redirection threshold, determine to redirect the user equipment to the second cell.

The second redirection out threshold indicates a critical value of the downlink power load of the first cell from which the user equipment can be redirected to another cell. When the downlink power load of the first cell is greater than or equal to the second redirection out threshold, it indicates that downlink load of the first cell is relatively heavy, and by means of redirection, load sharing may be performed by another cell to improve system capacity. The second redirection out threshold may be preset by the system. For example, the system may set the second redirection out threshold according to a downlink power load condition when the first cell is busy. If the downlink power load is relatively heavy when the first cell is busy, the second redirection out threshold may be set to a smaller value, so that more user equipments in the first cell can be redirected to another cell for load sharing; and if the downlink power load of the first cell is relatively light, the second redirection out threshold may be set to a larger value. It should be noted that the condition of the downlink power load when the first cell is busy may be predefined or obtained in advance by the system, but this does not indicate a real-time condition of the downlink power load of the first cell.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of HSDPA users may be selected as the second cell. For example, the multiple blind handover neighboring cells of the first cell or the multiple same coverage inter-frequency neighboring cells of the first cell may be sorted by the number of HSDPA users, and the cell with a least number of HSDPA users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

The second redirection in threshold indicates a critical value of the downlink power load of the second cell, where the second cell can accept redirection of a user equipment from another cell. When the downlink power load of the second cell is less than or equal to the second redirection in threshold, it indicates that load of the downlink power load of the second cell is relatively light, and load sharing may be performed on another cell to improve a capacity of a multicarrier cell. The second redirection in threshold may be preset by the system. For example, the system may set the second redirection in threshold according to a downlink power load condition when the second cell is busy. If the load of the downlink power load is relatively heavy when the second cell is busy, the second redirection out threshold may be set to a smaller value; and if the load of the downlink power load is relatively light when the second cell is busy, the second redirection out threshold may be set to a smaller value, so that more user equipments can be accepted to be redirected to the second cell for load sharing. It should be noted that the downlink power load condition when the second cell is busy is predefined or obtained in advance by the system, but this does not indicate a real-time downlink power load condition of the second cell.

The second relative redirection threshold indicates a critical value of a difference between the downlink power load of the second cell and the downlink power load of the first cell, where the user equipment in the first cell can be redirected to the second cell. For example, if the second relative redirection threshold is 5 and the downlink power load of the first cell is 30, when the downlink power load of the second cell is 0 to 25, the user equipment in the first cell can be redirected to the second cell, and when the downlink power load of the second cell is greater than 25, the user equipment in the first cell cannot be redirected to the second cell. A value of the second relative redirection threshold may be preset by the system according to a load condition of the downlink power load when the second cell is busy. For example, if the load of the downlink power load is relatively heavy when the second cell is busy, the second relative redirection threshold may be set to a larger value to make it harder to redirect the user equipment in the first cell to the second cell. It should be noted that the load condition of the downlink power load when the second cell is busy is predefined or obtained in advance by the system, but this does not indicate a real-time load condition of the downlink power load of the second cell.

4. The redirecting unit 802 is configured to: if it is determined that the downlink power load of the first cell is greater than or equal to a second redirection out threshold, determine to redirect the user equipment to the second frequency channel number.

5. The redirecting unit 802 is configured to: when a status of the user equipment is the CELL_FACH state and the first cell is a non-preferential camping cell, and if it is determined that a direct transfer message of a CS domain exists in uplink data of the user equipment or an RAB assignment of a CS domain core network is received, determine to redirect the user equipment to the second cell or the second frequency channel number by means of F2F redirection.

The F2F redirection can enhance real-time service experience and reduce impact from a non-real-time service on quality of a real-time service.

An RNC provided in this embodiment of the present invention receives a cell update request message that is sent, in a first cell, by a user equipment in a PCH state or an FACH state, where the PCH state includes a cell_paging channel CELL_PCH and a registration area_paging channel URA_PCH, and the FACH state includes a cell_forward access channel CELL_FACH; determines, according to a preset policy, to redirect the user equipment to a second cell or a second frequency channel number; and sends a cell update response message to the user equipment, where the cell update response message includes frequency channel number information and scrambling code information that are of the second cell or frequency channel number information of the second frequency channel number, which can implement redirection of the user equipment in the PCH state or the FACH state, avoid a redirection failure, and improve system capacity and service quality.

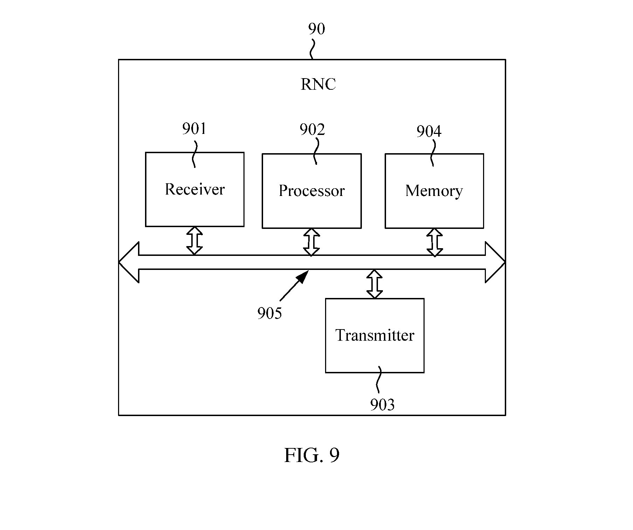

According to one aspect, an embodiment of the present invention provides an RNC100RNC90. Referring to FIG. 9, the RNC 90 includes: a receiver 901, a processor 902, a transmitter 903, a memory 904, and a communications bus 905 that is configured to implement connections and communication between these apparatuses.

The communications bus 905 may be an industry standard architecture (Industry Standard Architecture, ISA for short) bus, a peripheral component interconnection (Peripheral Component, PCI for short) bus, an extended industry standard architecture (Extended Industry Standard Architecture, EISA for short) bus, or the like. The bus 1104 may be categorized into an address bus, a data bus, a control bus, and the like. For ease of denotation, the bus is indicated by using only one thick line in FIG. 9; however, it does not indicate that there is only one bus or only one type of bus.

The memory 904 is configured to store executable program code, where the program code includes a computer operation instruction. The memory 904 may include a high-speed RAM memory, and may also include a non-volatile memory (non-volatile memory), such as at least one disk memory.

The processor 902 may be a central processing unit (Central Processing Unit, CPU for short), or an application specific integrated circuit (Application Specific Integrated Circuit, ASIC for short), or one or more integrated circuits configured to implement this embodiment of the present invention.

The processor 902 is configured to execute the executable program code stored in the memory 904, such as a computer program, so as to run a program corresponding to the executable code.

Specifically, the receiver 901 is configured to receive a cell update request message that is sent, in a first cell, by a user equipment in a PCH state or an FACH state, where the PCH state includes CELL_PCH and URA_PCH, and the FACH state includes CELL_FACH.

The processor 902 is configured to determine, according to a preset policy, to redirect the user equipment to a second cell or a second frequency channel number.

The transmitter 903 is configured to send a cell update response message to the user equipment, where the cell update response message includes frequency channel number information and scrambling code information that are of the second cell or frequency channel number information of the second frequency channel number.

The first cell is a cell that the UE currently accesses.

The first cell may be a preferential camping cell, and may also be a non-preferential camping cell. The preferential camping cell refers to, in a preferential camping networking manner, a cell on which the UE preferentially camps when the UE is idle, and the non-preferential camping cell refers to a cell on which the UE does not preferentially camp when the UE is idle.

The second cell is a blind handover neighboring cell of the first cell or a same coverage inter-frequency neighboring cell of the first cell. The second frequency channel number is a redirection frequency channel number that is configured by a system.

A redirection target of the user equipment may be a cell, and may also be a frequency channel number. It may be determined, according to a system configuration, whether the user equipment is redirected to a cell or a frequency channel number.

The processor 902 may redirect the user equipment to the second cell or the second frequency channel number based on the number of users that are in the FACH state and located in the first cell, and may also redirect the user equipment to the second cell or the second frequency channel number based on a service type of a service requested by the user equipment, and may also redirect the user equipment to the second cell or the second frequency channel number based on downlink power load of the first cell, and certainly may also redirect the user equipment to the second cell or the second frequency channel number based on a combination of the foregoing methods. For example, the user equipment may be redirected to the second cell or the second frequency channel number based on a combination of the number of users that are in the FACH state and located in the first cell and the service type of the service requested by the user equipment. For another example, the user equipment may also be redirected to the second cell or the second frequency channel number based on a combination of the downlink power load of the first cell and the service type of the service requested by the user equipment, which is not specifically limited in this embodiment of the present invention, and may be selected for use according to an actual requirement.

Various functions of the processor 902 are separately described below.

1. The processor 902 is configured to, if it is determined that the number of users that are in the FACH state and located in the first cell is greater than or equal to a first redirection out threshold, and
the number of users that are in the FACH state and located in the second cell is less than or equal to a first redirection in threshold, or if it is determined that a difference between the number of users that are in the FACH state and located in the second cell and the number of users that are in the FACH state and located in the first cell is greater than a first relative redirection threshold, determine to redirect the user equipment to the second cell.

The first redirection out threshold indicates a critical value of the number of users that are in the FACH state and located in the first cell, where the user equipment can be redirected to another cell. When the number of users that are in the FACH state and located in the first cell is greater than or equal to the first redirection out threshold, it indicates that load of an FACH channel of the first cell is relatively heavy, and by means of redirection, load sharing may be performed on another cell to improve utilization of the FACH channel, thereby improving system capacity. The first redirection out threshold may be preset by the system. For example, the system may set the first redirection out threshold according to a load condition of the FACH channel when the first cell is busy. If the load of the FACH channel is relatively heavy when the first cell is busy, the first redirection out threshold may be set to a smaller value, so that more user equipments can be redirected to another cell for load sharing; and if the load of the FACH channel is relatively light when the first cell is busy, the first redirection out threshold may be set to a larger value. It should be noted that the load condition of the FACH channel when the first cell is busy may be predefined or obtained in advance by the system, but this does not indicate a real-time load condition of the FACH channel of the first cell.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of FACH users may be selected as the second cell. For example, the multiple blind handover neighboring cells of the first cell or the multiple same coverage inter-frequency neighboring cells of the first cell may be sorted by the number of FACH users, and the cell with a least number of FACH users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

The first redirection in threshold indicates a critical value of the number of users that are in the FACH state and located in the second cell, where the second cell can accept redirection of a user equipment from another cell. When the number of users that are in the FACH state and located in the second cell is less than or equal to the first redirection in threshold, it indicates that load of an FACH channel of the second cell is relatively light, and load sharing may be performed on another cell to improve utilization of the FACH channel, thereby improving system capacity. The first redirection in threshold may be set by the system. For example, the system may set the first redirection in threshold according to a load condition of the FACH channel when the second cell is busy. If the load of the FACH channel is relatively light when the second cell is busy, the first redirection in threshold may be set to a larger value, so that more user equipments can be accepted to be redirected to this cell for load sharing; and if the load of the FACH channel is relatively heavy when the second cell is busy, the first redirection in threshold may be set to a smaller value. It should be noted that the load condition of the FACH channel when the second cell is busy may be predefined or obtained in advance by the system, but this does not indicate a real-time load condition of the FACH channel of the second cell.

The first relative redirection threshold indicates a critical value of a difference between the number of FACH users in the second cell and the number of FACH users in the first cell, where the user equipment in the first cell can be redirected to the second cell. For example, if the first relative redirection threshold is 5 and the number of FACH users in the first cell is 30, when the number of FACH users in the second cell is 0 to 25, the user equipment in the first cell can be redirected to the second cell, and when the number of FACH users in the second cell is greater than 25, the user equipment in the first cell cannot be redirected to the second cell. A value of the first relative redirection threshold may be preset by the system according to a load condition of the FACH channel when the second cell is busy. For example, if the load of the FACH channel is relatively heavy when the second cell is busy, the first relative redirection threshold may be set to a larger value to make it harder to redirect the user equipment in the first cell to the second cell. It should be noted that the load condition of the FACH channel when the second cell is busy may be predefined or obtained in advance by the system, but this does not indicate a real-time load condition of the FACH channel of the second cell.

The RNC may redirect the user equipment to the second cell or the second frequency channel number by means of P2F redirection, and a target status of the user equipment in the CELL_PCH state or the URA_PCH state is the CELL_FACH state after the redirection.

2. The processor 902 is configured to, if it is determined that the number of users that are in the FACH state and located in the first cell is greater than or equal to a first redirection out threshold, determine to redirect the user equipment to the second frequency channel number. For example, the user equipment may be redirected to the second cell or the second frequency channel number by means of the P2F redirection.

3. The processor 902 is configured to determine, according to the cell update request message, the service type of the service requested by the user equipment, where the service type includes an RT service or an NRT service; and
when the first cell is a preferential camping cell, if it is determined that the service type of the service is a non-real-time service, determine to redirect the user equipment to the second cell or the second frequency channel number; or
when the first cell is a non-preferential camping cell, if it is determined that the service type of the service is a real-time service, determine to redirect the user equipment to the second cell or the second frequency channel number. For example, when the user equipment is in the CELL_PCH state or the URA_PCH state, the user equipment may be redirected to the second cell or the second frequency channel number by means of the P2F redirection; and when a status of the user equipment is the CELL_FACH state, the user equipment may be redirected to the second cell or the second frequency channel number by means of F2P redirection. The F2P redirection refers to redirection from the CELL_FACH state to the CELL_PCH state or the URA_PCH state, and the F2P redirection may reduce a cell update procedure, reduce signaling load of a control plane of the RNC, and reduce bandwidth occupation of the FACH.

The RNC may determine whether a service initiated by the user equipment is a non-real-time service or a real-time service by using a message cell carried in the cell update request.

The message cell carried in the cell update request may include a cell update cause (Cell update cause) and a service establishment cause (Establishment cause). A value of the cell update cause (Cell update cause) may include: uplink data transmission, paging response, cell reselection, and the like. A value of the service establishment cause may include: a calling interaction service, a calling background service, calling high priority signaling, a called interaction service, a called background service, called high priority signaling, a customization service, a calling session service, a called session service, and the like. Exemplarily, for details about the non-real-time service, refer to Table 1, and for the real-time service, refer to Table 2, which are not described herein again.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of HSDPA (High Speed Downlink Packet Access, HSDPA for short) users may be selected as the second cell. For example, the multiple blind handover neighboring cells of the first cell or the multiple same coverage inter-frequency neighboring cells of the first cell may be sorted by the number of HSDPA users, and the cell with a least number of HSDPA users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

3. The processor 902 is configured to, if it is determined that the downlink power load of the first cell is greater than or equal to a second redirection out threshold, and
downlink power load of the second cell is less than or equal to a second redirection in threshold, or if it is determined that a difference between the downlink power load of the second cell and the downlink power load of the first cell is greater than a second relative redirection threshold, determine to redirect the user equipment to the second cell.

The second redirection out threshold indicates a critical value of the downlink power load of the first cell from which the user equipment can be redirected to another cell. When the downlink power load of the first cell is greater than or equal to the second redirection out threshold, it indicates that downlink load of the first cell is relatively heavy, and by means of redirection, load sharing may be performed by another cell to improve system capacity. The second redirection out threshold may be preset by the system. For example, the system may set the second redirection out threshold according to a condition of the downlink power load when the first cell is busy. If the downlink power load is relatively heavy when the first cell is busy, the second redirection out threshold may be set to a smaller value, so that more user equipments in the first cell can be redirected to another cell for load sharing; and if the downlink power load of the first cell is relatively light, the second redirection out threshold may be set to a larger value. It should be noted that the downlink power load condition when the first cell is busy may be predefined or obtained in advance by the system, but this does not indicate a real-time downlink power load condition of the first cell.

The second cell is a blind handover neighboring cell of the first cell or a same coverage inter-frequency neighboring cell of the first cell.

Preferably, according to a neighbor relationship of a cell, if multiple blind handover neighboring cells of the first cell or multiple same coverage inter-frequency neighboring cells of the first cell exist, a cell with a least number of HSDPA users may be selected as the second cell. For example, the multiple blind handover neighboring cells of the first cell or the multiple same coverage inter-frequency neighboring cells of the first cell may be sorted by the number of HSDPA users, and the cell with a least number of HSDPA users is selected as the second cell.

According to the neighbor relationship of a cell, if one blind handover neighboring cell of the first cell or one same coverage inter-frequency neighboring cell of the first cell exists, the blind handover neighboring cell of the first cell or the same coverage inter-frequency neighboring cell of the first cell may be used as the second cell.

The second redirection in threshold indicates a critical value of the downlink power load of the second cell, where the second cell can accept redirection of a user equipment from another cell. When the downlink power load of the second cell is less than or equal to the second redirection in threshold, it indicates that load of the downlink power load of the second cell is relatively light, and load sharing may be performed on another cell to improve a capacity of a multicarrier cell. The second redirection in threshold may be preset by the system. For example, the system may set the second redirection in threshold according to a downlink power load condition when the second cell is busy. If the load of the downlink power load is relatively heavy when the second cell is busy, the second redirection out threshold may be set to a smaller value; and if the load of the downlink power load is relatively light when the second cell is busy, the second redirection out threshold may be set to a smaller value, so that more user equipments can be accepted to be redirected to the second cell for load sharing. It should be noted that the downlink power load condition when the second cell is busy is predefined or obtained in advance by the system, but this does not indicate a real-time downlink power load condition of the second cell.

The second relative redirection threshold indicates a critical value of a difference between the downlink power load of the second cell and the downlink power load of the first cell, where the user equipment in the first cell can be redirected to the second cell. For example, if the second relative redirection threshold is 5 and the downlink power load of the first cell is 30, when the downlink power load of the second cell is 0 to 25, the user equipment in the first cell can be redirected to the second cell, and when the downlink power load of the second cell is greater than 25, the user equipment in the first cell cannot be redirected to the second cell. A value of the second relative redirection threshold may be preset by the system according to a load condition of the downlink power load when the second cell is busy. For example, if the load of the downlink power load is relatively heavy when the second cell is busy, the second relative redirection threshold may be set to a larger value to make it harder to redirect the user equipment in the first cell to the second cell. It should be noted that the load condition of the downlink power load when the second cell is busy is predefined or obtained in advance by the system, but this does not indicate a real-time load condition of the downlink power load of the second cell.

4. The processor 902 is configured to: if it is determined that the downlink power load of the first cell is greater than or equal to a second redirection out threshold, determine to redirect the user equipment to the second frequency channel number.

5. The processor 902 is configured to: when a status of the user equipment is the CELL_FACH state and the first cell is a non-preferential camping cell, and if it is determined that a direct transfer message of a CS domain exists in uplink data of the user equipment or an RAB assignment of a CS domain core network is received, determine to redirect the user equipment to the second cell or the second frequency channel number by means of F2F redirection.

The F2F redirection can enhance real-time service experience and reduce impact from a non-real-time service on quality of a real-time service.

An RNC provided in this embodiment of the present invention receives a cell update request message that is sent, in a first cell, by a user equipment in a PCH state or an FACH state, where the PCH state includes a cell_paging channel CELL_PCH and a registration area_paging channel URA_PCH, and the FACH state includes a cell_forward access channel CELL_FACH; determines, according to a preset policy, to redirect the user equipment to a second cell or a second frequency channel number; and sends a cell update response message to the user equipment, where the cell update response message includes frequency channel number information and scrambling code information that are of the second cell or frequency channel number information of the second frequency channel number, which can implement redirection of the user equipment in the PCH state or the FACH state, avoid a redirection failure, and improve system capacity and service quality.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A redirection method, comprising:
receiving a cell update request message that is sent, in a first cell, by a user equipment in a paging channel PCH state or a forward access channel FACH state, wherein the PCH state comprises a cell_paging channel CELL_PCH and a registration area_paging channel URA_PCH, and the FACH state comprises a cell_forward access channel CELL_FACH;
determining, according to a preset policy, to redirect the user equipment to a second cell or a second frequency channel number; and
sending a cell update response message to the user equipment, wherein the cell update response message comprises frequency channel number information and scrambling code information that are of the second cell or frequency channel number information of the second frequency channel number.

2. The method according to the claim 1, wherein the determining, according to a preset policy, to redirect the user equipment to a second cell or a second frequency channel number comprises:
determining, based on the number of users that are in the FACH state and located in the first cell, to redirect the user equipment to the second cell or the second frequency channel number.

3. The method according to claim 2, wherein the determining, based on the number of users that are in the FACH state and located in the first cell, to redirect the user equipment to the second cell comprises:
if it is determined that the number of users that are in the FACH state and located in the first cell is greater than or equal to a first redirection out threshold, and
the number of users that are in the FACH state and located in the second cell is less than or equal to a first redirection in threshold, or if it is determined that a difference between the number of users that are in the FACH state and located in the second cell and the number of users that are in the FACH state and located in the first cell is greater than a first relative redirection threshold, determining to redirect the user equipment to the second cell, wherein the second cell is a blind handover neighboring cell of the first cell or a same coverage inter-frequency neighboring cell of the first cell.

4. The method according to claim 2, wherein the determining, based on the number of users that are in the FACH state and located in the first cell, to redirect the user equipment to the second frequency channel number further comprises:
if it is determined that the number of users that are in the FACH state and located in the first cell is greater than or equal to a first redirection out threshold, determining to redirect the user equipment to the second frequency channel number.

5. The method according to the claim 1, wherein the determining, according to a preset policy, to redirect the user equipment to a second cell or a second frequency channel number comprises:
redirecting the user equipment to the second cell or the second frequency channel number based on a service type of a service requested by the user equipment.

6. The method according to claim 5, wherein the redirecting the user equipment to the second cell or the second frequency channel number based on a service type of a service requested by the user equipment comprises:
determining, according to the cell update request message, the service type of the service requested by the user equipment, wherein the service type comprises a real-time service or a non-real-time service; and
when the first cell is a preferential camping cell, if it is determined that the service type of the service is a non-real-time service, determining to redirect the user equipment to the second cell or the second frequency channel number, wherein the second cell is a blind handover neighboring cell of the first cell or a same coverage inter-frequency neighboring cell of the first cell.

7. The method according to claim 5, wherein the redirecting the user equipment to the second cell or the second frequency channel number based on a service type of a service requested by the user equipment comprises:
determining, according to the cell update request message, the service type of the service requested by the user equipment, wherein the service type comprises a real-time service or a non-real-time service; and
when the first cell is a non-preferential camping cell, if it is determined that the service type of the service is a real-time service, determining to redirect the user equipment to the second cell or the second frequency channel number, wherein the second cell is a blind handover neighboring cell of the first cell or a same coverage inter-frequency neighboring cell of the first cell.

8. The method according to the claim 1, wherein the determining, according to a preset policy, to redirect the user equipment to a second cell or a second frequency channel number comprises:
determining, based on downlink power load of the first cell, to redirect the user equipment to the second cell or the second frequency channel number.

9. The method according to claim 8, wherein the determining, based on downlink power load of the first cell, to redirect the user equipment to the second cell comprises:
if it is determined that the downlink power load of the first cell is greater than or equal to a second redirection out threshold, and
downlink power load of the second cell is less than or equal to a second redirection in threshold, or if it is determined that a difference between the downlink power load of the second cell and the downlink power load of the first cell is greater than a second relative redirection threshold, determining to redirect the user equipment to the second cell, wherein the second cell is a blind handover neighboring cell of the first cell or a same coverage inter-frequency neighboring cell of the first cell.

10. The method according to claim 8, wherein the determining, based on downlink power load of the first cell, to redirect the user equipment to the second frequency channel number comprises:
if it is determined that the downlink power load of the first cell is greater than or equal to a second redirection out threshold, determining to redirect the user equipment to the second frequency channel number.

11. A radio network controller RNC, comprising:
a receiving unit, configured to receive a cell update request message that is sent, in a first cell, by a user equipment in a paging channel PCH state or a forward access channel FACH state, wherein the PCH state comprises a cell_paging channel CELL_PCH and a registration area_paging channel URA_PCH, and the FACH state comprises a cell_forward access channel CELL_FACH;
a redirecting unit, configured to determine, according to a preset policy, to redirect the user equipment to a second cell or a second frequency channel number; and
a sending unit, configured to send a cell update response message to the user equipment, wherein the cell update response message comprises frequency channel number information and scrambling code information that are of the second cell or frequency channel number information of the second frequency channel number.

12. The RNC according to claim 11, wherein the redirecting unit is specifically configured to determine, based on the number of users that are in the FACH state and located in the first cell, to redirect the user equipment to the second cell or the second frequency channel number.

13. The RNC according to claim 12, wherein the redirecting unit is specifically configured to:
if it is determined that the number of users that are in the FACH state and located in the first cell is greater than or equal to a first redirection out threshold, and
the number of users that are in the FACH state and located in the second cell is less than or equal to a first redirection in threshold, or if it is determined that a difference between the number of users that are in the FACH state and located in the second cell and the number of users that are in the FACH state and located in the first cell is greater than a first relative redirection threshold, determine to redirect the user equipment to the second cell, wherein the second cell is a blind handover neighboring cell of the first cell or a same coverage inter-frequency neighboring cell of the first cell.

14. The RNC according to claim 12, wherein the redirecting unit is specifically configured to:
if it is determined that the number of users that are in the FACH state and located in the first cell is greater than or equal to a first redirection out threshold, determine to redirect the user equipment to the second frequency channel number.

15. The RNC according to claim 11, wherein the redirecting unit is specifically configured to redirect the user equipment to the second cell or the second frequency channel number based on a service type of a service requested by the user equipment.

16. The RNC according to claim 15, wherein the redirecting unit is specifically configured to determine, according to the cell update request message, the service type of the service requested by the user equipment, wherein the service type comprises a real-time service or a non-real-time service; and
when the first cell is a preferential camping cell, if it is determined that the service type of the service is a non-real-time service, determine to redirect the user equipment to the second cell or the second frequency channel number, wherein the second cell is a blind handover neighboring cell of the first cell or a same coverage inter-frequency neighboring cell of the first cell.

17. The RNC according to claim 15, wherein the redirecting unit is specifically configured to determine, according to the cell update request message, the service type of the service requested by the user equipment, wherein the service type comprises a real-time service or a non-real-time service; and
when the first cell is a non-preferential camping cell, if it is determined that the service type of the service is a real-time service, determine to redirect the user equipment to the second cell or the second frequency channel number, wherein the second cell is a blind handover neighboring cell of the first cell or a same coverage inter-frequency neighboring cell of the first cell.

18. The RNC according to claim 11, wherein the redirecting unit is specifically configured to determine, based on downlink power load of the first cell, to redirect the user equipment to the second cell or the second frequency.

19. The RNC according to claim 18, wherein the redirecting unit is specifically configured to, if it is determined that the downlink power load of the first cell is greater than or equal to a second redirection out threshold, and
downlink power load of the second cell is less than or equal to a second redirection in threshold, or if it is determined that a difference between the downlink power load of the second cell and the downlink power load of the first cell is greater than a second relative redirection threshold, determine to redirect the user equipment to the second cell, wherein the second cell is a blind handover neighboring cell of the first cell or a same coverage inter-frequency neighboring cell of the first cell.

20. The RNC according to claim 18, wherein the redirecting unit is specifically configured to: if it is determined that the downlink power load of the first cell is greater than or equal to a second redirection out threshold, determine to redirect the user equipment to the second frequency channel number.
